# EUROPEAN PATENT APPLICATION

(11) **EP 4 016 930 A1**
(43) Date of publication of application: **22.06.2022**
(21) Application number: 20851552.8
(22) Date of filing: 13.08.2020
(51) Int. Cl.: H04L 12/24, H04L 12/703

(54) **ROUTING METHOD, BSR GENERATION METHOD, APPARATUS, AND STORAGE MEDIUM**

(30) Priority: 13.08.2019 CN 201910745684
(71) Applicant: ZTE Corporation, Shenzhen, Guangdong 518057 (CN)
(72) Inventor: ZOU, Wei, Shenzhen, Guangdong 518057 (CN); CHEN, Lin, Shenzhen, Guangdong 518057 (CN)
(74) Representative: Novagraaf Technologies
(86) International application number: PCT/CN2020/108794
(87) International publication number: WO 2021/027860

(57) **Abstract**

Provided are a routing method, a BSR generation method and device, and a storage medium. The routing method comprises: a first communication node acquires load information, and the first communication node sends routing configuration information to a second communication node, the routing configuration information comprising identifiers of data having different granularities and a routing list configured according to the load information for the data having different granularities.

## Description

### Cross-Reference to Related Disclosure

The present invention claims priority to Chinese patent application No. 201910745684.0, filed to the China National Intellectual Property Administration on August 13, 2019, the invention of which is hereby incorporated by reference in its entirety.

### Technical Field

The present invention relates to a radio communication network, and for example, relates to a routing method, a Buffer Status Report (BSR) generation method and an device, and a storage medium.

### Background

The 5th Generation (5G) mobile communication technology, which is being studied in the 3rd Generation Partnership Project (3GPP), will achieve greater throughput, more user connections, lower time delay, higher reliability and lower power consumption (including network side devices and user terminals). In the discussion of the 3GPP, an Integrated Access and Backhaul (IAB) technology is highly valued. Its goal is to make one or more IAB nodes connect to a parent node through a New Radio (NR) air interface by using a local Mobile Terminal (MT), and form a multi-hop radio self backhaul network on this basis. The IAB technology with radio self backhaul is one of the important technology choices to reduce the investment cost. A backhaul link and an access link use the same radio transmission technology, share the same frequency band, and reuse resources through time division or frequency division.

In the discussion of the 3GPP, each IAB node includes a Distributed Unit (DU) function part and an MT function part. The DU serves User Equipment (UE) of the node and the MT of the next hop node, and establishes Radio Link Control (RLC) connection with it. The function of the MT is equivalent to that of the UE, which is configured to access the previous hop parent node through an NR Uu interface of NR and establish RLC connection with it. Therefore, different IAB nodes can be connected to the previous hop parent node by utilizing the radio access capability of the local MT, and the parent node may also be connected to the previous hop node again until it is finally connected to an IAB Donor, which may also be called the next Generation NodeB (gNodeB). The IAB Donor includes a Donor Centralized Unit (CU) and a plurality of Donor DUs. Each Donor DU is connected to the Donor CU in a wired mode. The Donor CU and the Donor DU are connected through an enhanced F1 interface. The Donor CU and the DU of each IAB node are connected through the enhanced F1 interface. In order to improve the reliability, one IAB node can be connected to the plurality of parent nodes. In this way, many IAB nodes are connected with each other to form a complex IAB network. The 3GPP defines a new Backhaul Adaptation Protocol (BAP) layer on an RLC layer to control the transmission of service flow in the IAB network. The functions of the BAP layer mainly include routing, bearer mapping and the like.

In the Radio Access Network (RAN) 2#106th meeting, a basic method of routing in the IAB network is proposed: that is, a BAP sub-header of each data packet includes a routing Identifier (ID), and the BAP layer will select the next hop connection for the above data packet according to the routing ID included in the BAP sub-header of each data packet. This selection process can be realized through a mode of a routing table, that is, a routing ID and the next hop mapping table are configured, and then the corresponding next hop is found according to the routing ID. In the conclusion of the RAN2#106th meeting, each routing ID may include the BAP address of a destination node, or further include a specific BAP path ID.

Load sharing among routes may not be realized in the IAB network.

### Summary

The present invention provides a routing method, a BSR generation method, an device, and a storage medium, which may realize a load sharing routing mode.

The embodiment of the present invention provides a routing method, which may include the following steps.

A first communication node acquires load information.

The first communication node sends routing configuration information to a second communication node, the routing configuration information including identifiers of data having different granularities and a routing list configured according to the load information for the data having different granularities.

The embodiment of the present invention provides a routing method, which may include the following steps.

A second communication node sends load information to a first communication node.

The second communication node receives routing configuration information sent by the first communication node, the routing configuration information including identifiers of data having different granularities and a routing list configured according to the load information for the data having different granularities by the first communication node.

The embodiment of the present invention provides a routing method, which may include the following steps.

A second communication node sends routing status information, the routing status information comprising a routing ID and status information of the route to which the routing ID belongs.

The embodiment of the present invention provides a routing method, which may include the following steps.

A first communication node sends routing status information, the routing status information comprising a routing ID and status information of the route to which the routing ID belongs.

The embodiment of the present invention provides a BSR generation method, which may include the following steps.

A communication node generates a BSR according to data buffered in a BAP entity.

The embodiment of the present invention provides a routing device, which may include a processor configured to realize the routing method of any of the above embodiments when executing a computer program.

The embodiment of the present invention provides a BSR generation device, which may include a processor configured to realize the BSR generation method of any of the above embodiments when executing a computer program.

The embodiment of the present invention provides a storage medium, which stores a computer program. When the computer program is executed by a processor, any routing method or BSR generation method in the embodiment of the present invention is realized.

With regard to the above embodiments and other aspects of the present invention and its implementation modes, more descriptions are provided in the description of the accompanying drawings, specific implementation modes and claims.

### Brief Description of the Drawings

Fig. 1 is a schematic diagram of a routing method invention scene provided in an embodiment.
Fig. 2 is a flowchart of a routing method provided in an embodiment.
Fig. 3A is a signaling interaction diagram corresponding to a routing method provided by an embodiment shown in Fig. 2.
Fig. 3B is another signaling interaction diagram corresponding to a routing method provided by an embodiment shown in Fig. 2.
Fig. 4 is a flowchart of another routing method provided in an embodiment.
Fig. 5 is a flowchart of yet another routing method provided in an embodiment.
Fig. 6A is a signaling interaction diagram corresponding to a routing method provided by an embodiment shown in Fig. 5.
Fig. 6B is another signaling interaction diagram corresponding to a routing method provided by an embodiment shown in Fig. 5.
Fig. 7 is a flowchart of still another routing method provided in an embodiment.
Fig. 8A is a signaling interaction diagram corresponding to a routing method provided by an embodiment shown in Fig. 7.
Fig. 8B is yet another signaling interaction diagram corresponding to a routing method provided by an embodiment shown in Fig. 7.
Fig. 9 is a schematic structural diagram of a routing device provided in an embodiment.
Fig. 10 is a schematic structural diagram of another routing device provided in an embodiment.
Fig. 11 is a schematic structural diagram of yet another routing device provided in an embodiment.
Fig. 12 is a schematic structural diagram of still another routing device provided in an embodiment.
Fig. 13 is a schematic structural diagram of another routing device provided in an embodiment.

### Detailed Description of the Embodiments

The embodiments of the present invention will be described below in combination with the drawings. It should be noted that, without conflict, the embodiments in the present invention and the features in the embodiments may be arbitrarily combined with each other.

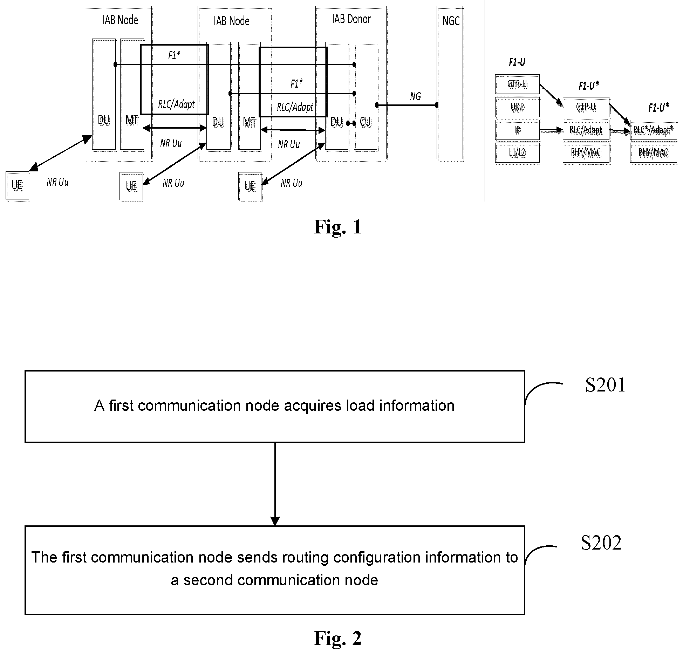

The routing method provided in the embodiment may be applied to a communication system composed of a first communication node and a second communication node. The communication system may be a Global System for Mobile Communications (GSM), a General Packet Radio Service (GPRS) system, a Code Division Multiple Access (CDMA) system, a CDMA2000 System, a Wideband Code Division Multiple Access (WCDMA) system, a Long Term Evolution (LTE) system, a Long Term Evolution Advanced (LTE-A) system or a World Interoperability for Microwave Access (WiMAX) system, etc. Exemplarily, the communication system may be an IAB communication system. Fig. 1 is a schematic diagram of a routing method invention scene provided in an embodiment. Exemplarily, the first communication node in the present invention may be a Donor CU in an IAB Donor in an IAB network, and the second communication node may be an IAB node in the IAB network or the Donor DU in the IAB Donor. As shown in Fig. 1, a DU in the IAB node provides an access service for subordinate UE, and a MT in the IAB node is associated with a previous-level parent node. As the special access user of the parent node, the MT shares the access bandwidth with other ordinary access users (UE) of the parent node. The IAB Donor may include a Donor CU and a plurality of Donor DUs. The IAB Donor is connected with the Next Generation Core (NGC). The plurality of Donor DUs are connected to the Donor CU in a wired mode. The Donor CU and the Donor DU are connected through an enhanced F1 interface (F1*). The Donor CU and the DU of each IAB node are connected through the enhanced F1 interface (F1*). Therefore, a one-hop or multi-hop data bearer needs to be established between the DU of IAB node and the Donor CU of the IAB Donor to transmit messages of the F1 interface. In each hop, the data bearer transmits data through a radio NR Uu bearer between the MT and the DU of each hop. Therefore, for a multi-hop F1 bearer, each intermediate IAB node needs to forward the received F1 message. This forwarding process may be realized by an Internet Protocol (IP) layer or an Adapt layer in the intermediate IAB node. The IP layer or the Adapt layer may forward a data packet to the next-hop NR Uu bearer according to the destination address (such as destination IAB node ID) or other information of the received data packet. Besides, at the IAB node on the access side, data also needs to be forwarded between the NR Uu bearer and an F1/F1*-U bearer. In the above data forwarding process, each IAB node may forward each previous-hop data bearer to a next-hop data bearer in a one-to-one mode, or forward a plurality of previous-hop data bearers to the next-hop data bearer in a many-for-one mode for transmission. The 3GPP has named the above Adapt layer as a BAP layer. When there are a plurality of routes from an IAB node to a destination IAB node, the IAB network may not realize load sharing among the various routes.

The present invention provides a routing method. A first communication node receives load information sent by a second communication node, and sends routing configuration information including a routing list determined according to the load information for data having different granularities to the second communication node, therefore, a load sharing routing mode is realized, load balancing is finally realized, and the reliability and the transmission efficiency of a communication system are improved.

Fig. 2 is a flowchart of a routing method provided in an embodiment. As shown in Fig. 2, the routing method provided by the embodiment may include the following steps.

At S201, a first communication node acquires load information.

The first communication node in the embodiment may be a Base Transceiver Station (BTS) in a GSM system or a CDMA system, a NodeB (NB) in a WCDMA system, an Evolved Node B (eNB) in LTE, a relay station or an access point, or a base station in the 5th Generation (5G) system, or a Donor CU in an IAB Donor in an IAB network and the like, which is not limited here.

In an embodiment, the first communication node acquires load information.

In an embodiment, the first communication node acquires load information of a second communication node. The second communication node may be a device that provides voice and/or other service data connectivity to a user, a handheld device with a radio connection function, or other processing devices connected to a radio modem, or an IAB node in an IAB network or a Donor DU in an IAB Donor.

In an embodiment, the first communication node acquires load information of other communication nodes, except the second communication node.

In an embodiment, the first communication node may send a load information acquisition request to the second communication node, and the second communication node sends load information to the first communication node after receiving the load information acquisition request sent by the first communication node.

In another embodiment, the second communication node may regularly report load information to the first communication node.

Optionally, the second communication node may send the load information to the first communication node through F1 interface Application Protocol (AP) signaling.

Optionally, the load information in the embodiment may include at least one of the following: radio transmission resource information, hardware processing resource information and buffer resource information.

Optionally, the load information in the embodiment may include at least one of the following: radio transmission resource information of the second communication node, hardware processing resource information of the second communication node and buffer resource information of the second communication node.

At S202, the first communication node sends routing configuration information to the second communication node.

The routing configuration information includes identifiers of data having different granularities and a routing list configured according to the load information for the data having different granularities.

In an embodiment, after acquiring load information, the first communication node determines a routing list according to the load information for the data having different granularities, includes the routing list in routing configuration information, and sends the routing configuration information to the second communication node.

In an embodiment, the identifiers of data having different granularities include at least one of the following: identifiers of Radio Bearers (RBs), identifiers of UE, an identifier of the second communication node and an identifier of a Quality of Service (QoS) category.

In an embodiment, the routing list may include one or more routing IDs. The routing IDs may include at least one of the following: the route number, an address of a destination routing node and an address of a routing source node.

In an implementation node, identifiers of RBs include at least one of the following: a Tunnel Endpoint Identifier (TEID) of a General Packet Radio Service Tunneling Protocol (GTP) data packet for the RB data transmission, an IP address of the first communication node, an IP address of a CU of the first communication node, an IP address of the second communication node, an IP address of an MT of the second communication node, an IP address of a DU of the second communication node, and Flow Label information in an IP data packet header for the RB data transmission.

In another implementation node, an identifier of the second communication node includes at least one of the following: an identifier of a DU in the second communication node, an IP address of the DU in the second communication node, an identifier of an MT in the second communication node, and an IP address of the MT in the second communication node.

In yet another implementation node, an identifier of a QoS category includes at least one of the following: the value of a Differentiated Services Code Point (DSCP) field of an IP data packet for the data transmission of the QoS category, flow label information of the IP data packet for the data transmission of the QoS category, an IP address of the IP data packet for the data transmission of the QoS category, and the 5G communication QoS Indicator (5QI) of Data Radio Bearers (DRBs) to which the data packet of QoS category belongs.

In an embodiment, the first communication node sends routing configuration information to the second communication node through new F1AP signaling. When the communication system is an IAB system, the first communication node sends the routing configuration information to a DU of the second communication node through the new F1AP signaling. The new F1AP signaling in the embodiment refers to sending a new AP message on an F1 interface.

In another embodiment, the first communication node adds routing configuration information to existing F1AP signaling, and sends the F1AP signaling after adding the information to the second communication node. The existing F1AP signaling in the embodiment refers to existing F1AP signaling in related arts.

Based on the embodiment: in an implementation mode, the first communication node adds the above routing configuration information to a UE CONTEXT SETUP request in the existing F1AP signaling, and sends the F1AP signaling after adding the information to the second communication node. In another implementation mode, the first communication node adds the above routing configuration information to a DRB to Be Setup Item Information Element in the UE CONTEXT SETUP request, and sends the F1AP signaling after adding the information to the second communication node.

In yet another embodiment, the first communication node sends routing configuration information to the second communication node through a new Radio Resource Control (RRC) message. When the communication system is an IAB system, the first communication node sends the routing configuration information to an MT of the second communication node through the new RRC message. The new RRC message in the embodiment refers to a newly sent RRC message.

In still another embodiment, the first communication node adds routing configuration information to an existing RRC message, and sends the RRC message to the second communication node. The existing RRC message in the embodiment refers to an existing RRC message in related arts.

In the embodiment, after receiving the routing configuration information, the second communication node may feed back a response message to the first communication node. Afterwards, data having different granularities needed to be transmitted in the second communication node may be transmitted according to routes corresponding to a routing list in the routing configuration information.

The above routing method is described below by taking a system applied by the routing method provided by the embodiment as an IAB system.

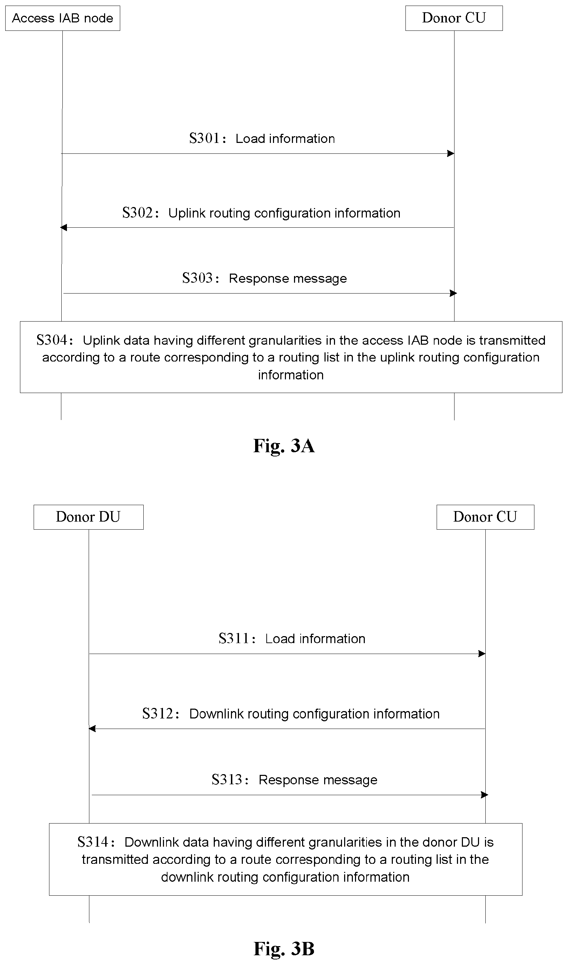

Fig. 3A is a signaling interaction diagram corresponding to a routing method provided by an embodiment shown by Fig. 2. In Fig. 3A, the routing configuration information is uplink routing configuration information. In the scene, the second communication node is an access IAB node. As shown in Fig. 3A, the signaling interaction process includes the following steps.

At S301, an access IAB node sends load information, and a first communication node (Donor CU) receives the load information sent by the access IAB node.

Exemplarily, the access IAB node sends the load information through F1AP signaling.

At S302, the Donor CU sends uplink routing configuration information to the access IAB node.

Exemplarily, the Donor CU may send the uplink routing configuration information to the access IAB node through new F1AP signaling, adding the uplink routing configuration information and a new RRC message to existing F1AP signaling, or adding the uplink routing configuration information to the existing RRC message.

At S303, after receiving the uplink routing configuration information, the access IAB node sends a response message to the Donor CU to confirm receiving of the uplink routing configuration information.

At S304, uplink data having different granularities in the access IAB node are transmitted according to routes corresponding to a routing list in the uplink routing configuration information.

Fig. 3B is another signaling interaction diagram corresponding to a routing method provided by an embodiment shown by Fig. 2. In Fig. 3B, the routing configuration information is downlink routing configuration information. In the scene, the second communication node is a Donor DU. As shown in Fig. 3B, the information interaction process includes the following steps.

At S311, the Donor DU sends load information, and a Donor CU receives the load information sent by the Donor DU.

Exemplarily, the Donor DU sends the load information through F1AP signaling.

At S312, the Donor CU sends downlink routing configuration information to the Donor DU.

Exemplarily, the Donor CU may send downlink routing configuration information to the Donor DU through new F1AP signaling or adding downlink routing configuration information to existing F1AP signaling.

At S313, after receiving the downlink routing configuration information, the Donor DU sends a response message to the Donor CU to confirm receiving of the downlink routing configuration information.

At S314, downlink data having different granularities in the Donor DU are transmitted according to routes corresponding to a routing list in the downlink routing configuration information.

In an embodiment, the routing configuration information further includes at least one of the following: the feature of routes corresponding to routing lists, the feature of the routes including at least one of the primary and backup, the priorities of the routes corresponding to the routing lists, a QoS identifier list that may be supported by the routes corresponding to the routing lists, the backup routing ID corresponding to the routing ID in the routing lists, and the number of remaining hops between the second communication node and a destination node in the routes corresponding to the routing lists.

It should be noted that, corresponding to the feature of the routes corresponding to the routing lists included in the routing configuration information, for the routing lists with the same source node and destination node, it may be determined that a routing list is the primary routing list and other routing lists are the backup routing lists. Corresponding to the backup routing ID corresponding to the routing ID in the routing list included in the routing configuration information, for a routing list, the routing ID may have a corresponding backup routing ID.

Based on the embodiment that the routing configuration information also includes the above information, after Radio Link Failure (RLF) of the second communication node, the second communication node may select the routes corresponding to the destination routing list for service data transmission according to the routing configuration information. The specific process how the second communication node selects the routes corresponding to the destination routing list according to the routing configuration information for service data transmission will be described in the following embodiments.

According to the routing method provided by the embodiment, the first communication node acquires the load information, and the first communication node sends the routing configuration information to the second communication node, the routing configuration information including identifiers of data having different granularities and the routing list determined according to the load information for the data having different granularities, so that a load sharing routing mode is realized, load balancing is finally realized, and the reliability and the transmission efficiency of the communication system are improved.

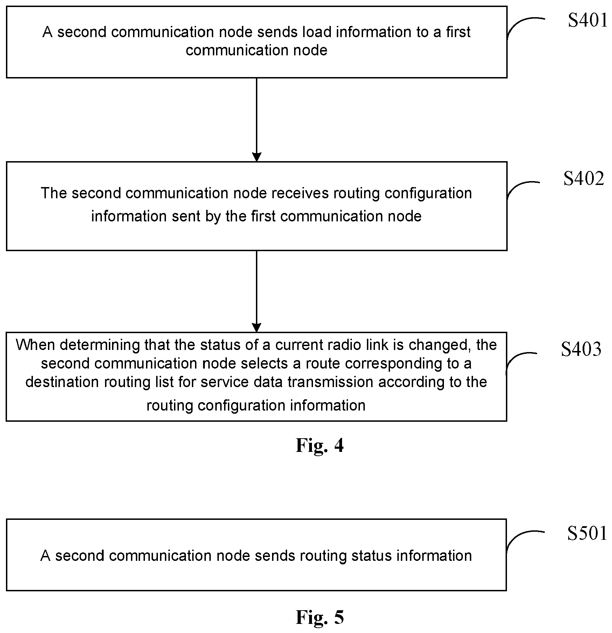

Fig. 4 is a flowchart of another routing method provided in an embodiment. As shown in Fig. 4, the routing method provided by the embodiment may include the following steps.

At S401, a second communication node sends load information to a first communication node. The S401 is an optional step in the embodiment.

In an embodiment, the second communication node may send load information to the first communication node.

In another embodiment, other communication nodes may send load information to the first communication node.

In an embodiment, the load information may include at least one of the following: radio transmission resource information of the second communication node, hardware processing resource information of the second communication node and buffer resource information of the second communication node.

In an embodiment, the second communication node may send load information to the first communication node through F1AP signaling.

At S402, the second communication node receives routing configuration information sent by the first communication node.

The routing configuration information includes identifiers of data having different granularities and a routing list configured according to the load information for the data having different granularities by the first communication node.

In an embodiment, the identifiers of data having different granularities include at least one of the following: identifiers of RBs, identifiers of UE, an identifier of the second communication node and an identifier of a QoS category.

The specific implementation modes of the identifiers of the RBs, the identifier of the second communication node and the identifier of the QoS category are the same as that in the embodiment shown in Fig. 2, which is not elaborated here.

In an embodiment, the routing list may include one or more routing IDs. The routing IDs may include at least one of the following: route numbers, an address of a destination routing node and an address of a routing source node.

The second communication node may receive routing configuration information sent by the first communication node through new F1AP signaling, adding the routing configuration information and a new RRC message to existing F1AP signaling, or adding the routing configuration information to the existing RRC message.

Similar to the embodiment shown in Fig. 2, the routing configuration information in the embodiment may include uplink routing configuration information or downlink routing configuration information.

After receiving the routing configuration information, the second communication node may feed back a response message to the first communication node. Afterwards, data having different granularities needed to be transmitted in the second communication node may be transmitted according to routes corresponding to a routing list in the routing configuration information.

In an embodiment, the routing configuration information further includes at least one of the following: the feature of routes corresponding to routing lists, the feature of the routes including at least one of the primary and backup, the priorities of the routes corresponding to the routing lists, a QoS identifier list that can be supported by the routes corresponding to the routing lists, the backup routing ID corresponding to the routing ID in the routing lists, and the number of remaining hops between the second communication node and a destination node in the routes corresponding to the routing lists.

Based on the above implementation method of the routing configuration information, optionally, the routing method provided by the embodiment also includes the following steps.

At S403, when determining that the status of a current radio link is changed, the second communication node selects the route corresponding to the destination routing list for service data transmission according to the routing configuration information.

Optionally, status change of the current radio link may be that the current radio link fails, the current radio link recovers from the failure, or the parameters of the current radio link change. Optionally, the above parameters may be Reference Signal Received Power (RSRP), Signal to Interference plus Noise Ratio (SINR), transmission delay, Packet Error Rate (PER) and the like of the current radio link.

In an embodiment, the second communication node may determine a destination routing list according to the default backup relationship. In the embodiment, the routing ID in the routing list may include a destination node and/or a path ID. Optionally, the routing lists with the same destination node can be regarded as a routing list group. When the route corresponding to a routing list in the group fails or the status changes, other routing lists in the group can be used as the backup routing lists of the failed routing list. Optionally, all uplink routing lists may be regarded as a routing list group. In the embodiment, the second communication node may take the backup routing list as the destination routing list.

In another embodiment, the second communication node may determine a destination routing list according to routing configuration information.

In an implementation mode, the second communication node determines the destination routing list according to the priorities of the routes corresponding to the routing lists, and transmits service data in the route corresponding to the destination routing list.

In the implementation mode, the second communication node determines the destination routing list according to the sequence of the priorities of the routing lists, and transmits service data in the route corresponding to the destination routing list. For example, the routing lists with priorities in the top N may be determined as the destination routing lists. N is an integer greater than or equal to 1.

In another implementation mode, the second communication node determines the destination routing list according to the number of remaining hops between the second communication node and the destination node in the routes corresponding to the routing lists, and transmits service data in the route corresponding to the destination routing list.

In the implementation mode, optionally, the second communication node may determine the routing lists in which the number of the remaining hops between the second communication node and the destination node in the routes corresponding to the routing lists is less than a preset threshold as the destination routing lists. Optionally, the second communication node may determine the routing lists in which a difference value between the number of the remaining hops between the second communication node and the destination node in the routes corresponding to the routing lists and the number of the remaining hops between the second communication node and the destination node in the routes corresponding to the current radio link is less than a preset difference value threshold as the destination routing lists.

In yet another implementation mode, the second communication node determines the destination routing list according to the QoS identifier list that can be supported by the route corresponding to the routing list, and transmits service data in the route corresponding to the destination routing list.

In the implementation mode, the second communication node may determine the routing list that may meet the routing list of the QoS of data to be transmitted as the destination routing list according to the QoS of the data to be transmitted and the QoS identifier list that can be supported by the route corresponding to the routing list.

In still another implementation mode, the second communication node determines the destination routing list according to local radio link information and routing configuration information, and transmits service data in the route corresponding to the destination routing list.

In the implementation mode, the second communication node may determine the destination routing list according to the local radio link information, such as at least one of the link quality information, transmission delay information and transmission reliability information of a radio link. The link quality information of the radio link can be RSRP and/or SINR of the radio link. The transmission reliability information of the radio link may be the transmission average PER. The local radio link information may be radio link information of the next hop of the backup route corresponding to the backup routing list.

In an embodiment, when determining that the service volume on a current radio link is greater than a specified service volume threshold, the second communication node selects routes corresponding to a plurality of destination routing lists for service data transmission. When determining that the service volume on the current radio link is less than or equal to the above service volume threshold, the second communication node selects the route corresponding to a destination routing list for service data transmission.

Based on the above embodiment, the specific process of selecting the routes corresponding to the plurality of destination routing lists for service data transmission may be as follows: the second communication node evenly distributes data to be transmitted to the routes corresponding to the plurality of destination routing lists for service data transmission; or, the second communication node distributes the data to be transmitted to the routes corresponding to the plurality of destination routing lists according to the distribution proportion for service data transmission. In an implementation mode, the second communication node determines the distribution proportion according to at least one of the priorities of the routing lists, the number of remaining hops between the second communication node and the destination node in the route corresponding to the routing list, the QoS identifier list that can be supported by the route corresponding to the routing list and the local radio link information. In another implementation mode, the first communication node configures the distribution proportion to the second communication node.

The distribution proportion may be determined by the second communication node according to at least one of the priorities of the routes corresponding to the plurality of destination routing lists, the number of remaining hops between the second communication node and the destination node in the route corresponding to the destination routing list, the QoS identifier list that can be supported by the route corresponding to the destination routing list and the local radio link information.

Based on the above embodiment, the second communication node may switch the data whose QoS of the data in the data to be transmitted meets preset conditions to the route corresponding to the destination routing list for transmission.

According to the routing method provided by the embodiment, the second communication node sends the load information to the first communication node, the second communication node receives the routing configuration information sent by the first communication node, when determining that the status of the current radio link is changed, the second communication node selects the route corresponding to the destination routing list for service data transmission according to the routing configuration information, on one hand, the load sharing routing mode is realized; on the other hand, when the status of the radio link in the route is changed, the destination routing list can be determined in time, and data transmission is continuously performed by utilizing the route corresponding to the destination routing list.

Fig. 5 is a flowchart of yet another routing method provided in an embodiment. As shown in Fig. 5, the routing method provided by the embodiment may include the following steps.

At S501, a second communication node sends routing status information.

The routing status information includes a routing ID and status information of a route to which the routing ID belongs.

In an embodiment, the routing status information also includes at least one of the following: a reachable route to which the routing ID belongs, an unreachable route to which the routing ID belongs, the number of hops of the route to which the routing ID belongs, and the cost of transmission per hop. Exemplarily, the cost of transmission per hop may include at least one of the following: the increased time delay required for transmission, the processing capacity of hardware required for transmission and occupied radio resources required by transmission.

In an embodiment, the routing status information also includes direction information that continues to be transmitted, that is, to an upstream node or a downstream node. After receiving the routing status information, other second communication nodes or first communication nodes transmit the routing status information in the uplink direction to its parent nodes and the routing status information in the downlink direction to its child nodes.

In an embodiment, the second communication node generates routing status information to be sent according to status change of a local radio link. In the embodiment, the status change of the local radio link may be the failure of the local radio link, the recovery from the failure, or the parameter change of the local radio link. Optionally, the above parameters may be RSRP, SINR, transmission time delay, PER and the like of the local radio link. The routing ID in the routing status information may include a routing ID that the radio link to the next hop is a failure link.

In an implementation mode of the embodiment, the second communication node sends the routing status information to the adjacent second communication node through BAP layer signaling. The adjacent second communication node may be a child node or a parent node of the second communication node. After receiving the routing status information, the adjacent second communication node filters the routing status information to form the routing status information to be sent, and then sends it to its adjacent second communication node to realize hop by hop transmission of the routing status information. In the process, if a second communication node finds that there is no affected routing ID locally after receiving the routing status information, it will not continue to transmit the routing status information. The affected routing ID here refers to the routing ID of the link whose status changes in the radio link to the next hop.

In another implementation mode of the embodiment, the second communication node sends the routing status information to the first communication node through new F1AP signaling, existing F1AP signaling, a new RRC message or an existing RRC message. The second communication node sends the routing status information to the first communication node by adding the routing status information to the existing F1AP signaling. The second communication node sends the routing status information to the first communication node by adding the routing status information to the existing RRC message. After receiving the routing status information, the first communication node may send the routing status information to other second communication nodes. Or, after receiving the routing status information, the first communication node sends the affected routing ID related to each other second communication node and the status information of the route to which the affected routing ID belongs in the routing status information to each other second communication node.

In another embodiment, the second communication node generates the routing status information to be sent according to the received routing status information. The second communication node filters the received routing status information according to the locally affected routing ID to form the routing status information. Namely, the routing ID which is not locally affected and the corresponding status information in the received routing status information are filtered out, and the finally formed routing status information to be sent includes the locally affected routing ID of the second communication node and the status information of the route to which the locally affected routing ID belongs.

In an implementation mode of the embodiment, the second communication node sends the routing status information to the adjacent second communication node through BAP layer signaling.

In another implementation mode of the embodiment, the second communication node sends the routing status information to the first communication node through new F1AP signaling, existing F1AP signaling, a new RRC message or an existing RRC message.

The above routing method is described below by taking a system applied by the routing method provided by the embodiment as an IAB system.

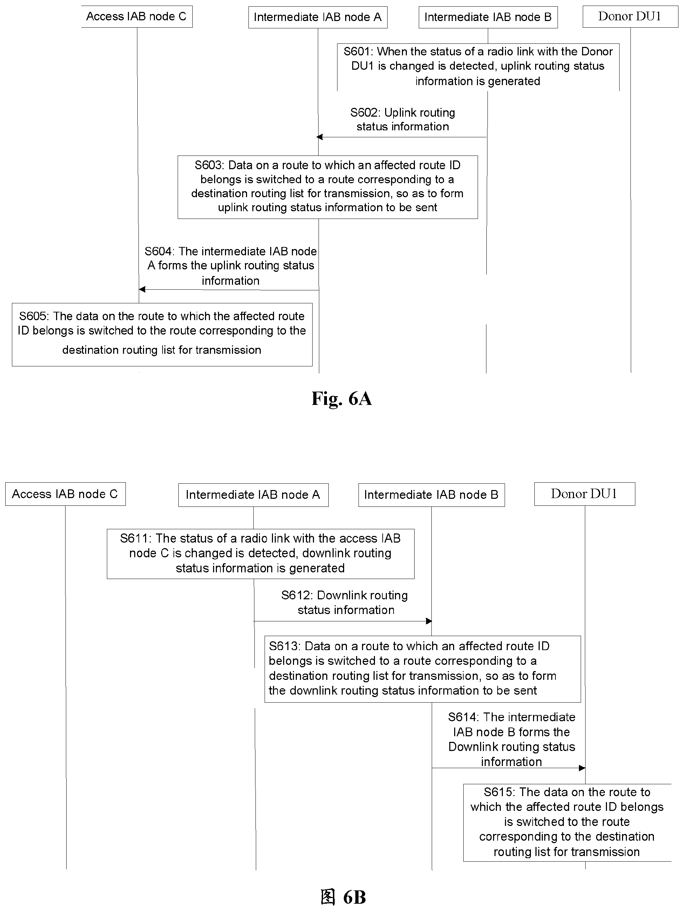

Fig. 6A is a signaling interaction diagram corresponding to a routing method provided by an embodiment shown by Fig. 5. In Fig. 6A, the routing status information is uplink routing status information. In the scene, the second communication node is an IAB node or a Donor DU. The following takes the second communication node as the intermediate IAB node A as an example. As shown in Fig. 6A, the signaling interaction process includes the following steps.

At S601, an intermediate IAB node B detects that the status of a radio link with a Donor DU1 is changed, and generates uplink routing status information.

At S602, the intermediate IAB node B sends the uplink routing status information to its child node intermediate IAB node A.

At S603, after receiving the uplink routing status information, the intermediate IAB node A acquires the affected routing ID and switches the data on the route to which the affected routing ID belongs to the route corresponding to a destination routing list for transmission. Simultaneously, the intermediate IAB node A filters the received uplink routing status information to form the uplink routing status information to be sent.

Optionally, after receiving the uplink routing status information, the intermediate IAB node A updates the used routing ID for the RB, UE, access IAB node or QoS category using the affected route. After receiving the above uplink routing status information, the intermediate IAB node A updates a BAP sub-header of a data packet sent to the affected route. Alternatively, the above updating includes the updating of the routing ID information in the BAP sub-header.

At S604, the intermediate IAB node A sends the uplink routing status information formed by the intermediate IAB node A to its child node access IAB node C.

At S605, after receiving the uplink routing status information sent by the intermediate IAB node A, an access IAB node C acquires the affected routing ID and switches the data on the route to which the affected routing ID belongs to the route corresponding to a destination routing list for transmission.

Through the above process, the hop-by-hop transmission of the uplink routing status information is realized.

Fig. 6B is another signaling interaction diagram corresponding to a routing method provided by an embodiment shown by Fig. 5. In Fig. 6B, the routing status information is downlink routing status information. In the scene, the second communication node is an IAB node or a Donor DU. The following takes the second communication node as the intermediate IAB node B as an example. As shown in Fig. 6B, the signaling interaction process includes the following steps.

At S611, an intermediate IAB node A detects that the status of a radio link with an access IAB node C is changed, and generates downlink routing status information.

At S612, the intermediate IAB node A sends the downlink routing status information to its parent node intermediate IAB node B.

At S613, after receiving the downlink routing status information, the intermediate IAB node B acquires the affected routing ID and switches the data on the route to which the affected routing ID belongs to the route corresponding to a destination routing list for transmission. Simultaneously, the intermediate IAB node B filters the received downlink routing status information to form the downlink routing status information to be sent.

Optionally, after receiving the downlink routing status information, the intermediate IAB node B updates the used routing ID for the DRB, UE, access IAB node or QoS service category using the affected route. After receiving the above downlink routing status information, the intermediate IAB node B updates a BAP sub-header of a data packet sent to the affected route. Alternatively, the above updating includes the updating of the routing ID information in the BAP sub-header.

At S614, the intermediate IAB node B sends the downlink routing status information formed by the intermediate IAB node B to its parent node Donor DU1.

At S615, after receiving the downlink routing status information sent by the intermediate IAB node B, the Donor DU1 acquires the affected routing ID and switches the data on the route to which the affected routing ID belongs to the route corresponding to a destination routing list for transmission.

Through the above process, the hop-by-hop transmission of the downlink routing status information is realized.

According to the routing method provided by the embodiment, the second communication node sends the routing status information, the routing status information including the routing ID and the status information of the route to which the routing ID belongs, so that transmission of the status information of the route is realized, it is convenient for each communication node to determine the status information of the route, and the data transmission reliability is improved.

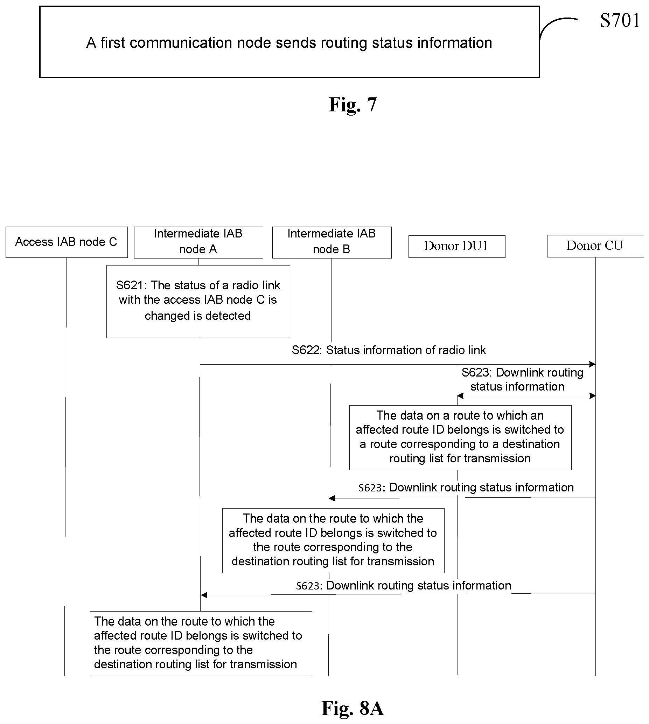

Fig. 7 is a flowchart of still another routing method provided in an embodiment. As shown in Fig. 7, the routing method provided by the embodiment may include the following steps.

At S701, a first communication node sends routing status information.

The routing status information includes a routing ID and status information of a route to which the routing ID belongs.

In an embodiment, the routing status information also includes at least one of the following: a reachable route to which the routing ID belongs, an unreachable route to which the routing ID belongs, the number of hops of the route to which the routing ID belongs, and the cost of transmission per hop. Exemplarily, the cost of transmission per hop may include at least one of the following: the increased time delay required for transmission, the processing capacity of hardware required for transmission and occupied radio resources required by transmission.

In an embodiment, the first communication node sends the routing status information to the second communication node. The first communication node sends the routing status information to the second communication node through F1AP signaling.

In an embodiment, before S701, the method also includes: the first communication node generates routing status information according to the status change of a radio link reported by the second communication node. Optionally, when finding the status change of a local radio link, the second communication node may report the status information of the radio link to the first communication node.

When the communication system is an IAB system, in one implementation mode, if the second communication node is an IAB node, an MT of the second communication node reports the status information of the radio link to the first communication node through RRC signaling, or a DU of the second communication node reports the status information of the radio link to the first communication node through F1AP signaling. In another embodiment, if the second communication node is a Donor DU, the second communication node reports the status information of the radio link to the first communication node through the F1AP signaling.

In the embodiment, the first communication node generates routing status information according to the status information of the radio link reported by the second communication node and sends it to each second communication node.

Optionally, the first communication node may send a routing ID only related to it and corresponding status information to each second communication node. When the communication system is an IAB system, in one implementation mode, if the second communication node is an IAB node, the first communication node notifies the second communication node of its related uplink routing ID and corresponding status information. In another implementation mode, if the second communication node is a Donor DU, the first communication node notifies the second communication node of its related downlink routing ID and corresponding status information.

In another embodiment, before S701, the method also includes: the first communication node generates routing status information according to the routing status information reported by the second communication node.

In an embodiment, after receiving the status information of the radio link, the first communication node configures new next-hop information for some routing IDs.

In an embodiment, after receiving the status information of the radio link, the first communication node updates the used routing ID for the RB, UE, access IAB node or QoS category using the affected route.

The above routing method is described below by taking a system applied by the routing method provided by the embodiment as an IAB system.

Fig. 8A is yet another signaling interaction diagram corresponding to a routing method provided by an embodiment shown by Fig. 7. In Fig. 8A, the routing status information is downlink routing status information. For example, description is below by taking the second communication node as the intermediate IAB node A and the first communication node as the Donor CU. As shown in Fig. 8A, the signaling interaction process includes the following steps.

At S621, an intermediate IAB node A detects that the status of a link with an access IAB node C is changed.

At S622, the intermediate IAB node A sends the status information of a radio link to a Donor CU.

Optionally, an MT of the intermediate IAB node A sends the status information of the radio link to the Donor CU. Or, a DU of the intermediate IAB node A sends the status information of the radio link to the Donor CU.

Optionally, when the second communication node is a Donor DU and the Donor DU finds that the status of a radio link is changed, the Donor DU sends the status information of the radio link to the Donor CU through F1AP signaling.

At S623, the Donor CU sends downlink routing status information to a Donor DU1 and an IAB node.

Optionally, the Donor CU sends the downlink routing status information through the F1AP signaling. The Donor CU may send its related affected routing ID and the status information of the route to which the affected routing ID belongs to each IAB node and the Donor DU1.

Optionally, after receiving the status information of the radio link, the Donor CU may configure new next-hop information for some routing IDs. Optionally, after receiving the downlink routing status information, the Donor CU may configure a new primary and/or backup routing ID for the affected RB, UE, access IAB node or QoS category.

After receiving the downlink routing status information, the Donor DU1 and the IAB node acquire the affected routing ID and switches the data on the route to which the affected routing ID belongs to the route corresponding to a destination routing list for transmission.

Optionally, after receiving the downlink routing status information, the IAB node and the Donor DU1 update the used routing ID for the RB, UE, access IAB node or QoS category using the affected route. After receiving the above downlink routing status information, the IAB node and the Donor DU1 update a BAP sub-header of a data packet sent to the affected route. Alternatively, the above updating includes the updating of the routing ID information in the BAP sub-header.

Through the above process, the Donor CU notifies the Donor DU and IAB node of the downlink routing status information.

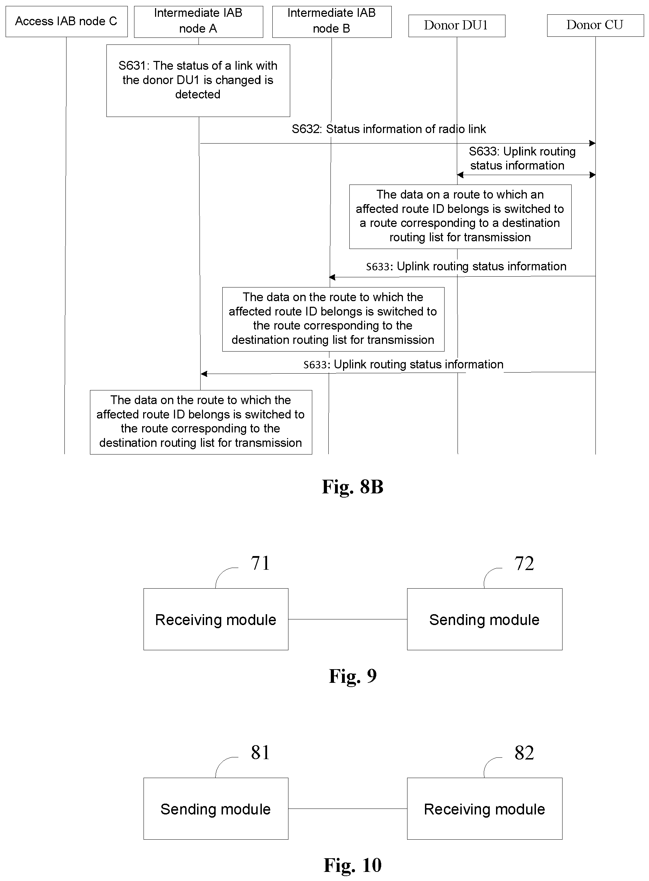

Fig. 8B is still another signaling interaction diagram corresponding to a routing method provided by an embodiment shown by Fig. 5. In Fig. 8B, the routing status information is uplink routing status information. For example, description is below by taking the second communication node as the intermediate IAB node B and the first communication node as the Donor CU. As shown in Fig. 8B, the signaling interaction process includes the following steps.

At S631, the intermediate IAB node B detects that the status of a link with a Donor DU1 is changed.

At S632, the intermediate IAB node B sends the status information of a radio link to a Donor CU.

At S633, the Donor CU sends uplink routing status information to the Donor DU1 and an IAB node.

The Donor CU may send its related affected routing ID and the status information of the route to which the affected routing ID belongs to each IAB node and the Donor DU1.

After receiving the uplink routing status information, the Donor DU1 and the IAB node acquire the affected routing ID and switches the data on the route to which the affected routing ID belongs to the route corresponding to a destination routing list for transmission.

Optionally, after receiving the uplink routing status information, the IAB node and the Donor DU1 update the used routing ID for the RB, UE, access IAB node or QoS category using the affected route. After receiving the above uplink routing status information, the IAB node and the Donor DU1 update a BAP sub-header of a data packet sent to the affected route. Alternatively, the above updating includes the updating of the routing ID information in the BAP sub-header.

Through the above process, the Donor CU notifies the Donor DU and IAB node of the uplink routing status information.

According to the routing method provided by the embodiment, the first communication node sends the routing status information, the routing status information including the routing ID and the status information of the route to which the routing ID belongs, so that transmission of the status information of the route is realized, it is convenient for each communication node to determine the status information of the route, and the data transmission reliability is improved.

The invention further provides a BSR generation method, which includes: a communication node generates a BSR according to data buffered in a BAP entity.

Namely, the communication node may consider the volume of data buffered in the BAP entity while generating the BSR.

Optionally, the data buffered in the BAP entity may be the data associated with the BAP entity or the data identified as being processed by a BAP layer.

Optionally, the data buffered in the BAP entity is the data associated with the specified route or the specified RLC entity.

Since data on different routes will be finally sent through different RLC entities, the BAP entity needs to count the data volume of the buffered data according to the sending RLC entity or routing ID, and then notify a Media Access Control (MAC) entity of A local DU and/or a local MT. After receiving the above information, the MAC entity may also report the amount of the data buffered in the BAP entity in the BSR. For example, the data volume of a logical link group in the final BSR may include the data buffered in each RLC entity in the logical link group and the data buffered in the BAP entity associated with the above RLC entity. Optionally, the data buffered in the BAP entity associated with the above RLC entity may be associated with an RLC entity through an identifier of its transmission route. That is, there is a mapping from a routing ID to an RLC entity ID. the BAP layer or MAC layer counts the amount of data buffered in the BAP entity associated with an RLC entity according to the above mapping.

At this time, in order to delete the successfully sent data in time, the RLC entity is required to notify the BAP entity to delete the corresponding data after receiving the ACKnowledgement (ACK) of an air interface. Or, the data is deleted from a buffer of the BAP entity immediately after being transmitted to the RLC entity. At this time, the RLC entity needs to transmit the unsuccessfully sent data to the BAP entity after sending RLF, and then perform subsequent processing.

In an embodiment, the communication node generates the BSR according to the volume of the data buffered in the BAP entity.

In an embodiment, the communication node generates the BSR according to the data buffered in the BAP entity and the data buffered in the specified RLC entity.

Fig. 9 is a schematic structural diagram of a routing device provided in an embodiment. As shown in Fig. 9, the routing device provided by the embodiment includes the following modules: a receiving module 71 and a sending module 72.

The receiving module 71 is configured to receive load information sent by a second communication node.

The sending module 72 is configured to send routing configuration information to the second communication node.

The routing configuration information includes a routing list determined according to the load information for data having different granularities.

Optionally, the receiving module 71 is an optional module of the routing device.

In an implementation module, the sending module 72 is configured to: send the routing configuration information to the second communication node through F1AP signaling.

In another implementation module, the sending module 72 is configured to: add the routing configuration information to the existing F1AP signaling, and send it to the second communication node. Optionally, the routing configuration information is added to a UE CONTEXT SETUP request in the existing F1AP signaling or a DRB to Be Setup Item Information Element of the message, and then it is sent to the second communication node.

In yet another implementation module, the sending module 72 is configured to: send the routing configuration information to the second communication node through a new RRC message.

In still another implementation module, the sending module 72 is configured to: add the routing configuration information to the existing RRC message, and send the RRC message after adding the routing configuration information to the second communication node.

In an embodiment, the routing lists include at least one of the following: routing lists configured for RBs, routing lists configured for UE, routing lists configured for the second communication node and routing lists configured for data of a QoS category.

In an implementation node, corresponding to the fact that the routing lists include the routing lists configured for the RBs, the routing lists include identifiers of the RBs, and the identifiers of the RBs include at least one of the following: a TEID of a GTP data packet for the RB data transmission, an IP address of the first communication node, an IP address of a CU of the first communication node, an IP address of the second communication node, an IP address of an MT of the second communication node, an IP address of a DU of the second communication node, and Flow Label information in an IP data packet header for the RB data transmission.

In another implementation node, corresponding to the fact that the routing lists include the routing lists configured for the second communication node, the routing lists include an identifier of the second communication node, and the identifier of the second communication node includes at least one of the following: an identifier of a DU in the second communication node, an IP address of the DU in the second communication node, an identifier of an MT in the second communication node, and an IP address of the MT in the second communication node.

In yet another implementation node, corresponding to the fact that the routing lists include the routing lists configured for the data of the QoS category, the routing lists include an identifier of the QoS category, and the identifier of the QoS category includes at least one of the following: the value of a DSCP field of an IP data packet for the data transmission of the QoS category, flow label information of the IP data packet for the data transmission of the QoS category, an IP address of the IP data packet for the data transmission of the QoS category, and the 5QI of a DRB to which the data packet of QoS category belongs.

In an embodiment, the routing configuration information further includes at least one of the following: the feature of routes corresponding to routing lists, the feature of the routes including at least one of the primary and backup, the priorities of the routes corresponding to the routing lists, a QoS ID list that can be supported by the routes corresponding to the routing lists, the backup routing ID corresponding to the routing ID in the routing lists, and the number of remaining hops between the second communication node and a destination node in the routes corresponding to the routing lists.

The routing device provided in the embodiment is configured to realize the routing method of the embodiment shown in Fig. 2. The implementation principle of the routing device provided in the embodiment is similar and will not be elaborated here.

Fig. 10 is a schematic structural diagram of another routing device provided in an embodiment. As shown in Fig. 10, the routing device provided by the embodiment includes the following modules: a sending module 81 and a receiving module 82.

The sending module 81 is configured to send load information to a first communication node.

The receiving module 82 is configured to receive routing configuration information sent by the first communication node.

The routing configuration information includes a routing list determined according to the load information for data having different granularities by the first communication node.

Optionally, the sending module 81 is an optional module of the routing device.

In an embodiment, the routing configuration information further includes at least one of the following: the feature of routes corresponding to routing lists, the feature of the routes including at least one of the primary and backup, the priorities of the routes corresponding to the routing lists, a QoS ID list that can be supported by the routes corresponding to the routing lists, the backup routing ID corresponding to the routing ID in the routing lists, and the number of remaining hops between the second communication node and a destination node in the routes corresponding to the routing lists.

In an embodiment, the device further includes a selection module, which is configured to select a route corresponding to a destination routing list for service data transmission according to the routing configuration information after the routing device determines that the status of a current radio link is changed.

In an implementation mode, the selection module is configured to: determine the destination routing list according to the priorities of the routes corresponding to the routing lists, and transmit service data in the route corresponding to the destination routing list.

In another implementation mode, the selection module is configured to: determine the destination routing list according to the number of the remaining hops between the routing device and the destination node in the routes corresponding to the routing lists, and transmit service data in the route corresponding to the destination routing list.

In yet another implementation mode, the selection module is configured to: determine the destination routing list according to a QoS identifier list that can be supported by the route corresponding to the routing list, and transmit service data in the route corresponding to the destination routing list.

In still another implementation mode, the selection module is configured to: determine the destination routing list according to local radio link information and the routing configuration information, and transmit service data in the route corresponding to the destination routing list.

In an embodiment, the selection module is set to select the route corresponding to the destination routing list for service data transmission in the following ways: when determining that the service volume on the current radio link is greater than a specified service volume threshold, selecting routes corresponding to a plurality of destination routing lists for service data transmission, and when determining that the service volume on the current radio link is less than or equal to the above service volume threshold, selecting the route corresponding to a destination routing list for service data transmission.

In an embodiment, the selection module is set to select the routes corresponding to the plurality of destination routing lists for service data transmission in the following ways: transmitting service data by evenly distributing data to be transmitted to the routes corresponding to the plurality of destination routing lists, or, determining the distribution proportion according to at least one of the priories of the routing lists, the number of remaining hops between the second communication node and the destination node in the routes corresponding to the routing lists, the QoS identifier list that can be supported by the routes corresponding to the routing lists and the local radio link information, and distributing the data to be transmitted to the routes corresponding to the plurality of destination routing lists according to the distribution proportion for service data transmission.

The routing device provided in the embodiment is configured to realize the routing method of the embodiment shown in Fig. 4. The implementation principle of the routing device provided in the embodiment is similar and will not be elaborated here.

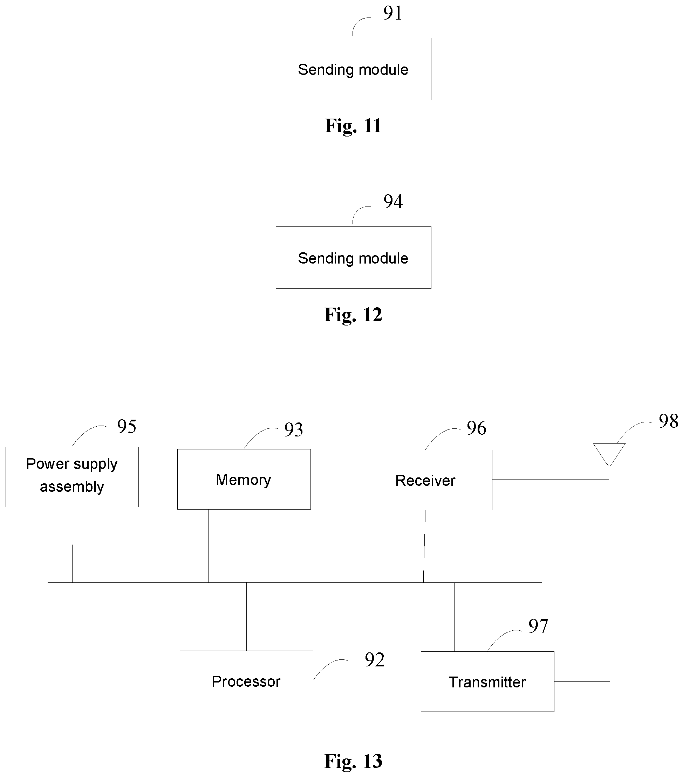

Fig. 11 is a schematic structural diagram of yet another routing device provided in an embodiment. As shown in Fig. 11, the routing device provided by the embodiment includes the following module: a sending module 91.

The sending module 91 is configured to send routing status information.

The routing status information includes a routing ID and status information of a route to which the routing ID belongs.

In an embodiment, the sending module 91 is configured to: send the routing status information to the adjacent second communication node through BAP layer signaling.

In an embodiment, the sending module 91 is configured to: send the routing status information to the first communication node through new F1AP signaling, existing F1AP signaling, a new RRC message or an existing RRC message.

In an embodiment, the device also includes: a first generation module, which is configured to generate the routing status information to be sent according to the received routing status information. In an implementation mode, the first generation module is configured to: filter the received routing status information according to a locally affected routing ID to form the routing status information.

In an embodiment, the device also includes: a second generation module, which is configured to generate the routing status information to be sent according to status change of a local radio link.

The routing device provided in the embodiment is configured to realize the routing method of the embodiment shown in Fig. 5. The implementation principle of the routing device provided in the embodiment is similar and will not be elaborated here.

Fig. 12 is a schematic structural diagram of still another routing device provided in an embodiment. As shown in Fig. 12, the routing device provided by the embodiment includes a sending module 94.

The sending module 94 is configured to send routing status information.

The routing status information includes a routing ID and status information of a route to which the routing ID belongs.

In an embodiment, the device also includes: a first generation module, which is configured to generate the routing status information according to status information of a radio link reported according to a second communication node.

In yet another embodiment, the device also includes: a second generation module, which is configured to generate the routing status information according to the routing status information reported according to the second communication node.

The routing device provided in the embodiment is configured to realize the routing method of the embodiment shown in Fig. 7. The implementation principle of the routing device provided in the embodiment is similar and will not be elaborated here.

The embodiment also provides a BSR generation device. The BSR generation device provided by the embodiment includes a generation module, which is configured to generate a BSR according to data buffered in a BAP entity.

In an embodiment, the data buffered in the BAP entity is the data associated with the specified route or the specified RLC entity.

In an embodiment, the generation module is configured to: generate the BSR according to the volume of the data buffered in the BAP entity.

In an embodiment, the generation module is configured to: generate the BSR according to the data buffered in the BAP entity and the data buffered in the specified RLC entity.

The BSR generation device provided in the embodiment is configured to realize the BSR generation method of the embodiment. The implementation principle of the BSR generation device provided in the embodiment is similar and will not be elaborated here.

Fig. 13 is a schematic structural diagram of still another routing device provided in an embodiment. As shown in Fig. 13, UE includes a processor 92. Optionally, the UE also includes a memory 93, a power supply assembly 95, a receiver 96, a transmitter 97 and an antenna 98. The number of the processors 92 in the routing device may be one or more, and one processor 92 is taken as an example in Fig. 13: the processor 92 in the routing device may be connected with the memory 93, the power supply assembly 95, the receiver 96 and the transmitter 97 through a bus or other means. In Fig. 13, the connection through the bus is taken as an example. The receiver 96 and the transmitter 97 are connected with the antenna 98.

As a computer-readable storage medium, the memory 93 is configured to store a software program, a computer executable program and a module, such as a program instruction/module corresponding to the routing method in the embodiments of Figs. 1 to 7 of the present invention (for example, the receiving module 71 and the sending module 72 in the routing device, or the sending module 81 and the receiving module 82 in the routing device, or the sending module 91 in the routing device, or the sending module 94 in the routing device). The processor 92 executes various functional inventions and data processing of the routing device by running software programs, instructions and modules stored in the memory 93, that is, the above routing method is realized.

The memory 93 may mainly include a storage program area and a storage data area, wherein the storage program area may store an operating system and an invention program required for at least one function, and the storage data area may store data and the like created according to the use of the routing device. In addition, the memory 93 may include a high-speed random access memory and may also include a nonvolatile memory, such as at least one disk storage device, flash memory device, or other nonvolatile solid-state storage devices.

The power supply assembly 95 provides power for various modules of the routing device. The power supply assembly 95 may include a power supply management system, one or more power supplies, and other components associated with generation, management and distribution of power for the routing device. The transmitter 97 is configured to send signals to other devices through the antenna 98, and the receiver 96 is configured to receive signals from other devices through the antenna 98. Exemplarily, in the embodiment, the receiver 96 acquires load information through the antenna 98, and the transmitter 97 sends the routing configuration information to the second communication node through the antenna 98.

The embodiment of the present invention also provides a storage medium including a computer executable instruction, which is used to execute the routing method or the BSR generation method provided by any embodiment of the present invention when being executed by a computer processor.

The above are only exemplary embodiments of the present invention and are not used to limit the scope of protection of the present invention.

Those skilled in the art should understand that the term UE covers any suitable radio user devices, such as a mobile phone, a portable data processing device, a portable web browser or an on-board mobile station.

In general, various embodiments of the present invention may be implemented in hardware or dedicated circuits, software, logic, or any combination thereof. For example, some aspects may be implemented in the hardware, while others aspects may be implemented in firmware or software that may be executed by a controller, a microprocessor or other computing devices, although the present invention is not limited thereto.

The embodiment of the present invention may be realized by executing a computer program instruction by a data processor of a mobile device, such as, in a processor entity, or through hardware, or through a combination of software and hardware. The computer program instruction may be an assembly instruction, an Instruction Set Architecture (ISA) instruction, a machine instruction, a machine related instruction, a microcode, a firmware instruction, state setting data or a source code or target code edited by one or any combination of more programming languages.

The block diagram of any logic flow in the drawings of the present invention may represent program steps, or interconnected logic circuits, modules and functions, or a combination of program steps and logic circuits, modules and functions. The computer program is stored in the memory. The memory may have any type suitable for a local technology environment and may be implemented by using any suitable data storage technology, such as but not limited to a Read-Only Memory (ROM), a Random Access Memory (RAM), an optical memory device and system (Digital Versatile Disc (DVD) or Compact Disk (CD) etc.. The computer-readable medium may include a non-transient storage medium. The data processor can be any type suitable for the local technical environment, such as but not limited to a general-purpose computer, a special-purpose computer, a microprocessor, a Digital Signal Processing (DSP), an Application Specific Integrated Circuit (ASIC), a Field-Programmable Gate Array (FGPA) and a processor based on multi-core processor architecture.

## Claims

1. A routing method, comprising:
acquiring, by a first communication node, load information; and
sending, by the first communication node, routing configuration information to a second communication node, wherein the routing configuration information comprises identifiers of data having different granularities and a routing list configured according to the load information for the data having different granularities.

2. The method according to claim 1, wherein the routing list comprises at least one routing Identifier, ID, and the routing ID comprises at least one of the following: the route number, an address of a destination routing node and an address of a routing source node.

3. The method according to claim 1 or 2, wherein the identifiers of the data having different granularities comprise at least one of the following:
an identifier of a Radio Bearer, RB;
an identifier of User Equipment, UE;
an identifier of the second communication node; and
an identifier of a Quality of Service, QoS, category.

4. The method according to claim 3, wherein the identifier of the RB comprises at least one of the following:
a Tunnel Endpoint Identifier, TEID, of a General Packet Radio Service Tunneling Protocol, GTP, data packet for the RB data transmission;
an Internet Protocol, IP, address of the first communication node;
an IP address of a Centralized Unit, CU, of the first communication node;
an IP address of the second communication node;
an IP address of a Mobile Terminal, MT, of the second communication node;
an IP address of a Distributed Unit, DU, of the second communication node; and
Flow Label information in an IP data packet header for the RB data transmission.

5. The method according to claim 3, wherein the identifier of the second communication node comprises at least one of the following:
an identifier of the DU in the second communication node;
an IP address of the DU in the second communication node;
an identifier of the MT in the second communication node; and
an IP address of the MT in the second communication node.

6. The method according to claim 3, wherein the identifier of the QoS category comprises at least one of the following:
a Differentiated Services Code Point, DSCP, value of an I P data packet for the data transmission of the QoS category;
flow label information of the IP data packet for the data transmission of the QoS category;
an IP address of the IP data packet for the data transmission of the QoS category; and
a 5th Generation, 5G, communication QoS Indicator of Data Radio Bearers, DRBs, to which the data packet of QoS category belongs.

7. The method according to claim 1, wherein the routing configuration information also comprises at least one of the following:
the feature of routes corresponding to the routing list, the feature of the routes comprising at least one of primary route and backup route;
priorities of the routes corresponding to the routing list;
a QoS identifier list that can be supported by the routes corresponding to the routing list;
the backup routing ID corresponding to the routing ID in the routing list; and
the number of remaining hops between the second communication node and a destination node in the routes corresponding to the routing list.

8. The method according to claim 1, wherein the first communication node sends routing configuration information to the second communication node, comprising:
sending, by the first communication node, the routing configuration information to the second communication node through new F1 interface Application Protocol, F1AP, signaling; or, adding, by the first communication node, the routing configuration information to the existing F1AP signaling, and sending the F1AP signaling after adding the routing configuration information to the second communication node; or,
adding, by the first communication node, the routing configuration information to a UE CONTEXT SETUP request in the existing F1AP signaling or a DRB to Be Setup Item Information Element of the UE CONTEXT SETUP request in the existing F1AP signaling, and sending the F1AP signaling after adding the routing configuration information to the second communication node; or,
controlling, by the first communication node, a Radio Resource Control, RRC, message through a new radio resource, and sending the routing configuration information to the second communication node; or
adding, by the first communication node, the routing configuration information to the existing RRC message, and sending the RRC message after adding the routing configuration information to the second communication node.

9. A routing method, comprising:
receiving, by a second communication node, routing configuration information sent by a first communication node, wherein the routing configuration information comprising identifiers of data having different granularities and a routing list configured according to the load information for the data having different granularities by the first communication node.

10. The method according to claim 9, wherein the routing configuration information also comprises at least one of the following:
the feature of routes corresponding to routing list, the feature of the routes comprising at least one of primary route and backup route;
the priorities of the routes corresponding to the routing list;
a Quality of Service, QoS, identifier list that can be supported by the routes corresponding to the routing list;
the backup routing ID corresponding to the routing ID in the routing list; and
the number of remaining hops between the second communication node and a destination node in the routes corresponding to the routing list.

11. The method according to claim 10, after the second communication node receives the routing configuration information sent by the first communication node, further comprising:
selecting a route corresponding to a destination routing list for service data transmission according to the routing configuration information after the second communication node determines that the status of a current radio link is changed.

12. The method according to claim 11, wherein selecting the route corresponding to the destination routing list for service data transmission according to the routing configuration information comprises:
determining, by the second communication node, the destination routing list according to the priority of the route corresponding to the routing list, and transmitting service data in the route corresponding to the destination routing list.

13. The method according to claim 11, wherein selecting the route corresponding to the destination routing list for service data transmission according to the routing configuration information comprises:
determining, by the second communication node, the destination routing list according to the number of remaining hops between the second communication node and a destination node in the route corresponding to the routing lists, and transmitting service data in the route corresponding to the destination routing list.

14. The method according to claim 11, wherein selecting the route corresponding to the destination routing list for service data transmission according to the routing configuration information comprises:
determining, by the second communication node, the destination routing list according to the QoS identifier list that can be supported by the routes corresponding to the routing lists, and transmitting service data in the route corresponding to the destination routing list.

15. The method according to claim 11, wherein selecting the route corresponding to the destination routing list for service data transmission according to the routing configuration information comprises:
determining, by the second communication node, the destination routing list according to local radio link information and the routing configuration information, and transmitting service data in the route corresponding to the destination routing list.

16. The method according to claim 11, wherein selecting the route corresponding to the destination routing list for service data transmission comprises:
selecting routes corresponding to a plurality of destination routing lists for service data transmission when the second communication node determines that the service volume on a current radio link is greater than a specified service volume threshold; and
selecting the route corresponding to a destination routing list for service data transmission when the second communication node determines that the service volume on the current radio link is less than or equal to the service volume threshold.

17. The method according to claim 16, wherein selecting the routes corresponding to the plurality of destination routing lists for service data transmission comprises:
equally distributing, by the second communication node, service data to be transmitted to the routes corresponding to the plurality of destination routing lists for transmission; or,
determining the distribution proportion, by the second communication node, according to at least one of: the priories of the routes corresponding to the routing lists, the number of remaining hops between the second communication node and the destination node in the routes corresponding to the routing lists, the QoS identifier list that can be supported by the routes corresponding to the routing lists and the local radio link information; and distributing the data to be transmitted to the routes corresponding to the plurality of destination routing lists according to the distribution proportion for service data transmission.

18. A routing method, comprising:
sending, by a second communication node, routing status information, wherein the routing status information comprising a routing ID and status information of a route to which the routing ID belongs.

19. The method according to claim 18, wherein the second communication node sends the routing status information, comprising:
sending, by the second communication node, the routing status information to the second communication node adjacent to the second communication node through Backhaul Adaptation Protocol (BAP) layer signaling.

20. The method according to claim 18, wherein the second communication node sends the routing status information, comprising:
sending, by the second communication node, the routing status information to a first communication node through new F1 interface Application Protocol, F1AP, signaling, existing F1AP signaling, a new Radio Resource Control, RRC, message, or an existing RRC message.

21. The method according to claim 18, before the second communication node sends the routing status information, further comprising:
generating, by the second communication node, the routing status information to be sent by the second communication node according to the received routing status information; or,
generating, by the second communication node, the routing status information to be sent by the second communication node according to status change of a local radio link.

22. A routing method, comprising:
sending, by a first communication node, routing status information, wherein the routing status information comprising a routing ID and status information of a route to which the routing ID belongs.

23. The method according to claim 22, before the first communication node sends the routing status information, further comprising:
generating, by the first communication node, the routing status information according to the status information of a radio link reported by a second communication node; or,
generating, by the first communication node, the routing status information according to the routing status information reported by the second communication node.

24. A method for generating a Buffer Status Report, BSR, comprising:
generating, by a communication node, a BSR according to data buffered in a Backhaul Adaptation Protocol, BAP, entity.

25. The method according to claim 24, wherein the data buffered in the BAP entity is the data associated with the specified route or the specified Radio Link Control, RLC, entity.

26. The method according to claim 24, wherein the communication node generates the BSR according to the data buffered in the BAP entity, comprising:
generating, by the communication node, the BSR according to the volume of the data buffered in the BAP entity.

27. The method according to claim 25, wherein the communication node generates the BSR according to the data buffered in the BAP entity, comprising:
generating, by the communication node, the BSR according to the data buffered in the BAP entity and the data buffered in the specified RLC entity.

28. A routing device, comprising a processor configured to realize the routing method according to any one of claims 1-23 when executing a computer program.

29. A device for generating a Buffer Status Report, BSR, comprising a processor configured to realize the routing method according to any one of claims 24-27 when executing a computer program.

30. A computer-readable storage medium, wherein a computer program is stored in the computer-readable storage medium; and the computer program realizes the routing method according to any one of claims 1-23 or the Buffer Status Report, BSR, generation method according to any one of claims 24-27 when being executed by a processor.
